Europäisches Patentamt

European Patent Office

Office européen des brevets

(11) Veröffentlichungsnummer: **0 253 946 B1**

# EUROPÄISCHE PATENTSCHRIFT

(45) Veröffentlichungstag der Patentschrift: **26.06.91**

(51) Int. Cl.⁵: **G01L 9/04**

(21) Anmeldenummer: **87100397.6**

(22) Anmeldetag: **14.01.87**

(54) **Mechanisch-elektrischer Wandler.**

(30) Priorität: **18.07.86 DE 3624240**

(43) Veröffentlichungstag der Anmeldung:
**27.01.88 Patentblatt 88/04**

(45) Bekanntmachung des Hinweises auf die
Patenterteilung:
**26.06.91 Patentblatt 91/26**

(84) Benannte Vertragsstaaten:
**DE ES FR GB IT NL SE**

(56) Entgegenhaltungen:
**EP-A- 0 134 394
DE-A- 3 009 091
DE-A- 3 026 785
DE-A- 3 125 640
US-A- 4 034 610**

(73) Patentinhaber: **VDO Adolf Schindling AG**
**Gräfstrasse 103**
**W-6000 Frankfurt/Main 90(DE)**

(72) Erfinder: **Kant, Bernhard**
**Friedrich-Ebert-Strasse 37**
**W-6203 Hochheim(DE)**

(74) Vertreter: **Klein, Thomas, Dipl.-Ing. (FH)**
**Sodener Strasse 9 Postfach 6140**
**W-6231 Schwalbach a. Ts.(DE)**

## Beschreibung

Die Erfindung bezieht sich auf einen mechanisch-elektrischen Wandler mit einem blattartigen, mindestens zwei Aussparungen aufweisenden Dehnkörper, der randseitig mit einer Halterung verbunden ist, und dessen Mitte durch ein druckbeaufschlagtes Element auslenkbar ist und bei dem auf biegebalkartigen Abschnitten mindestens zwei dehnungsempfindliche Widerstände angeordnet sind, von denen bei Auslenkung des Dehnkörpers je einer auf Zug und der andere auf Druck beansprucht wird.

Ein Druckwandler dieser Art ist bereits aus der DE-OS 30 26 785 bekannt. Dieser Druckwandler enthält einen Dehnkörper mit zwei parallel zueinander angeordneten Aussparungen, zwischen denen ein Auslenkstreifen verläuft. Der Dehnkörper besteht z.B. aus Silizium oder Germanium und ist in seiner Mitte über einen zylindrischen Zapfen und an seinen Rändern über ein ringförmiges Schichtelement mit einer auf einer Seite vom Druck unmittelbar beaufschlagten Membran verbunden.

Bekannt ist auch ein Druckaufnehmer mit einem druckempfindlichen Element aus monokristallinem Silizium. Das Element weist eine Membran geringer Dicke mit einem stärker ausgebildeten Rand auf. In der Membran sind dehnungsempfindliche Widerstände angeordnet. Die Membran enthält ein dick ausgebildetes Mittenteil (DE-OS 25 49 001).

Es ist ferner ein Druckaufnehmer für niedrige Drücke bekannt, der eine aus einer weichen Deckschicht bestehende Membran enthält, die auf einem starren Rand aufliegt. Der Rand ist über zwei als Biegebalken wirkende Stege mit einem Kolben mechanisch verbunden, auf den der zu messende Druck einseitig einwirkt. Auf den Stegen befinden sich Dehnungsmeßstreifen zur Erfassung der Verformung der Stege. Zur Verlängerung der Stege sind beidseitig in den Kolben parallel zu den Stegen verlaufende Einschnitte eingearbeitet (DE-OS 30 04 031).

Der relativ biegeweiche Dehnkörper der bekannten mechanisch-elektrischen Wandler muß durch eine Halterung unterstützt werden. Es ist technisch nur mit sehr hohem Aufwand möglich, den Temperaturausdehnungskoeffizienten des Dehnkörpers mit genügender Genauigkeit an den der Halterung anzupassen. Somit rufen Temperaturänderungen in der Halterung und im Dehnkörper unterschiedliche Volumenänderungen hervor. Die Volumenänderungen der Halterung erzeugen im Dehnkörper Spannungen, die bei ausgelenktem Membranmittelteil zu Lageänderungen desselben führen, durch die Druckänderungen vorgetäuscht werden.

Schließlich ist aus der DE-OS 30 09 091 eine Meßfederplatte mit verbesserter Stabilität gegen Seitenkräfte und geringerem Einfluß der Seitenkräfte auf das Meßergebnis bekanntgeworden, bei der eine Anzahl winkelförmiger Schlitze mit dem Mittelpunkt zugewandten Winkelöffnungen labyrinthartig angeordnet ist und bei der die Plattenstärke zwischen parallel zueinander verlaufenden Schlitzteilen vermindert ist. Damit wird zwar schon eine erhebliche Verbesserung gegenüber den anderen bekannten mechanisch-elektrischen Wandlern erreicht, die Verminderung der Plattenstärke ist aber nur mit verhältnismäßig hohem Aufwand möglich. Es muß nämlich an einem an sich schon sehr dünnen Bauteil ein hinsichtlich Querabmessung und Tiefe sehr eng tolerierter Materialabtrag vorgesehen werden, der einerseits ein sehr sorgfältiges und kostenintensives Bearbeiten erfordert und andererseits bei der kleinsten Unregelmäßigkeit zu hohen Ausschußraten führt.

Der Erfindung liegt die Aufgabe zugrunde, einen mechanisch-elektrischen Wandler der eingangs beschriebenen Art so auszubilden, daß er einen wirtschaftlich herstellbaren Aufbau hat, bei dem Beanspruchungen, die von der Halterung des Dehnkörpers auf diesen einwirken, keine Druckeinflüsse an den dehnungsempfindlichen Widerständen vortäuschen.

Die Aufgabe wird erfindungsgemäß dadurch gelöst, daß in einem gattungsgemäßen Wandler

a) durch die Aussparungen ein erstes, fest mit der Halterung verbundenes Teil und ein mit diesem durch mindestens zwei biegebalkenartige Abschnitte verbundenes zweites Teil gebildet wird, dessen Mitte durch das Element auslenkbar ist, und

b) die biegebalkenartigen Abschnitte je einen breiteren Mittelabschnitt und zwei daran angrenzende schmalere die Widerstände tragende Endabschnitte aufweisen und in gleichmäßigen Abständen voneinander tangential zu einem konzentrisch zur Mitte des zweiten Teils verlaufenden Kreisbogen angeordnet sind.

Vorzugsweise sind die dehnungsempfindlichen Widerstände in Dünnschichttechnik als Dehnungsmeßstreifen auf dem blattartigen Dehnkörper aufgebracht. Die Dehnungsmeßstreifen haben zweckmäßigerweise einen K-Faktor im Bereich von 10 bis 30. Derartige Dehnungsmeßstreifen können eine transversale Empfindlichkeit haben, die annähernd so groß ist wie die longitudinale. Mit der Erfindung werden die Nachteile, wie sie bei radialer Anordnung derartiger Dehnungsmeßstreifen auftreten, vermieden. Die Nachteile von auf radialen Biegebalken angeordneten Dehnungsmeßstreifen der oben angegebenen Art ergeben sich daraus, daß die Dehnungsmeßstreifen zweidimensionalen Spannungszuständen ausesetzt sind, die bei hohen K-Faktoren oftmals zu Signalverringerungen führen.

Dies ist insbesondere der Fall, wenn die Dehnungsmeßstreifen an den Stellen mit den größten radialen Biegespannungen angeordnet werden, was eigentlich auf Gründen hoher Meßempfindlichkeit anzustreben ist. Bei einer solchen Anordnung wird mit dem jeweils auf Druck beanspruchten Dehnungsmeßstreifen nur ein geringeres Signal als erwartet erzeugt. Da diese Nachteile bei dem erfindungsgemäßen mechanischelektrischen Wandler im wesentlichen ausgeschaltet werden, können die Wandler mit Dehnungsmeßstreifen, die hohe K-Faktoren aufweisen, in Dünnschichttechnik kostengünstig hergestellt werden. Es läßt sich eine Massenproduktion unter Verwendung der Nutzentechnik einrichten. Die aus prozeßtechnischen Gründen planar ausgebildeten Teile können wegen der unzureichenden Eigenstabilität des Dehnkörpers in Halterungen eingespannt werden, ohne daß die bei bekannten Wandlern vorhandenen Schwierigkeiten hinsichtlich einer hohen Empfindlichkeit auftreten.

Bei einer bevorzugten Ausführungsform ist vorgesehen, daß das zweite Teil Z-förmig mit einem Loch in der Mitte und zwei in entgegengesetzte Richtungen weisenden Rechteckabschnitten ausgebildet ist, deren Enden über biegebalkenartige Abschnitte mit dem ersten Teil verbunden sind.

Bei einer anderen Ausführungsform ist vorgesehen, daß

a) der Dehnkörper eine im wesentlichen quadratische Grundfläche aufweist,

b) das zweite Teil als Diagonalstück mit einem Loch in der Mitte ausgebildet ist, das mit zwei diagonal gegenüberliegenden Eckstücken des Dehnkörpers verbunden ist, und

c) die Endstücke über je zwei biegebalkenartige Abschnitte mit den beiden anderen, an die Halterung angeschlossenen Endstücken des Dehnkörpers verbunden sind.

Eine weitere Abwandlung des Erfindungsgedankens ist dadurch gekennzeichnet, daß

a) der Dehnkörper eine kreisförmige Grundfläche aufweist,

b) das zweite Teil aus einem im wesentlichen quadratischen Membranmittelteil mit einem Loch in der Mitte besteht, an dessen Ecken vier nach außen weisende Rechteckabschnitte ausgebildet sind, und

c) die Rechteckabschnitte über parallel zu den Seiten des Membranmittelteils angeordnete biegebalkenartige Abschnitte mit dem als Randteil ausgebildeten ersten Teil verbunden sind.

Schließlich kann der erfindungsgemäße Wandler so ausgeführt werden, daß

a) der Dehnkörper eine kreisförmige Grundfläche aufweist,

b) das zweite Teil aus einem im wesentlichen quadratischen Membranmittelteil besteht, an dessen Ecken vier nach außen weisende Rechteckabschnitte ausgebildet sind,

c) von denen zwei diametral gegenüberliegende über parallel zu den Seiten des Membranmittelteils angeordnete biegebalkenartige Abschnitte und die beiden anderen über Abschnitte gleichbleibender Breite mit dem als Randteil ausgebildeten ersten Teil verbunden sind.

Weitere Einzelheiten und Vorteile sind den Unteransprüchen 6 bis 10 und den Figuren 1 bis 6 zu entnehmen.

Es zeigen:

Fig. 1    einen mechanisch-elektrischen Wandler im Querschnitt,

Fig. 2    einen im mechanisch-elektrischen Wandler gemäß Fig. 1 angeordneten Dehnkörper von oben,

Fig. 3    eine andere Ausführungsform eines Dehnkörpers von oben,

Fig. 4    eine dritte Ausführungsform eines Dehnkörpers von oben,

Fig. 5    eine vierte Ausführungsform eines Dehnkörpers von oben und

Fig. 6    eine fünfte Ausführungsform eines Dehnkörpers von oben.

Ein mechanisch-elektrischer Wandler 1 enthält ein topfförmiges Gehäuseteil 2, das durch einen Deckel 3 verschlossen ist. Der Deckel 3 hat eine Aussparung 4, die durch eine Membran 5 abgedeckt ist. Der Raum 6 zwischen Gehäuseteil 2 Deckel 3 und Membran 5 ist einem Druckmedium über einen Durchlaß 11 im Gehäuseteil 2 zugänglich.

Die Membran 5 befindet sich auf der einen Seite des Deckels 3. Sie ist mit einem nicht näher bezeichneten, ebenen Randstreifen mit der an die Aussparung 4 angrenzenden ebenen Zone des Deckels 3 verbunden. Auf der anderen Seite des Deckels 3 ist ein Dehnkörper 7 befestigt, in dessen Mitte ein Loch 8 angeordnet ist, in das das abgesetzte Ende 9 eines Zapfens 10 ragt, dessen anderes Ende mit der Membran 5 verbunden ist. Der Deckel 3 ist die Halterung für den Dehnkörper 7, der als dünnes, druckempfindliches Element ausgebildet ist und beispielsweise aus monokristallinem Silizium besteht, in das dehnungsempfindliche Widerstände durch Diffusion eingearbeitet sind.

Wenn der Raum 6 mit dem Druckmedium beaufschlagt wird, dann wölbt sich die Membran 5 etwas nach außen. Hierdurch wird der Zapfen 10 gegen den Dehnkörper 7 gedrückt, der insbesondere in seiner Mitte etwas gewölbt wird. Hierdurch werden die auf dem Dehnkörper 7 angeordneten Widerstände paarweise je auf Zug und Druck beansprucht. Die Widerstände befinden sich in einer Brückenschaltung, an der eine dem jeweiligen Druck im Raum 6 entsprechende Spannung abgreifbar ist.

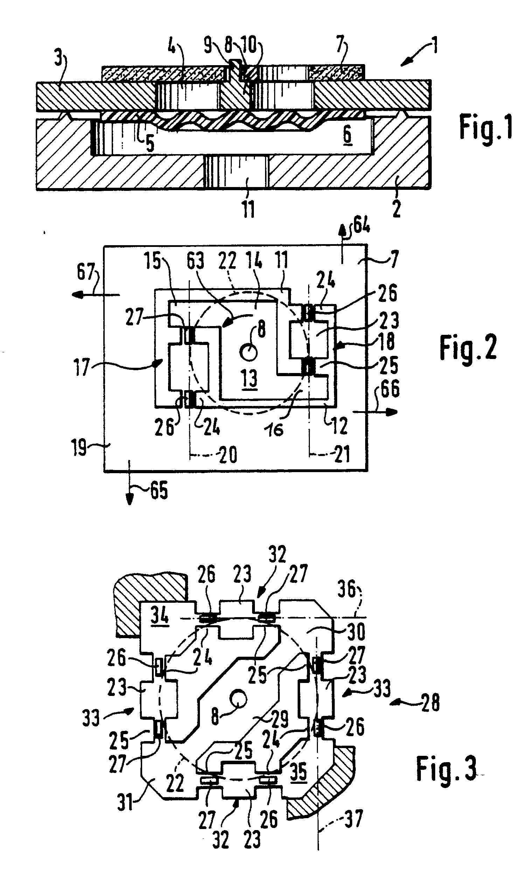

Die Fig. 2 zeigt den blattartigen Dehnkörper 7 von oben, der zwei Aussparungen 11, 12 aufweist, die ein Membranmittelteil 13 umgeben, in dem sich das Loch 8 befindet. Das Membranmittelteil 13 hat ungefähr eine Z-förmige Gestalt. Es weist ein Basisrechteck 14 mit dem Loch 8 auf. Von den verschiedenen Enden des Basisrechtecks 14 ragen rechtwinklig nach entgegengesetzten Richtungen zwei Rechteckabschnitte 15, 16 nach außen. Zwei biegebalkenartige Abschnitte 17, 18 verbinden je einen Rechteckabschnitt 15, 16 mit dem Randteil 19 des Dehnkörpers 7. Die biegebalkenartigen Abschnitte 17, 18 sind in Bezug auf das kreisrunde Loch 8 so angeordnet, daß sie mit ihren Längsachsen 20, 21 in gleichmäßigen Abständen tangential zu einem Kreisbogen 22 verlaufen, der das Loch 8 konzentrisch umgibt. Der Dehnkörper 7 enthält, wie alle nachfolgend noch beschriebenen Dehnkörper, zwei Teile, von denen das erste mit dem Halter verbunden ist, während das zweite Teil über biegebalkenartige Abschnitte, auch Stege genannt, mit dem ersten Teil verbunden ist.

Die biegebalkenartigen Abschnitte 17, 18 weisen jeweils einen breiten Mittelabschnitt 23 und zwei schmalere Endabschnitte 24, 25 auf, die in das Randteil 19 übergehen. Auf den Endabschnitten 24, 25 sind jeweils die dehnungsempfindlichen Widerstände 26, 27 in Form von Dehnungsmeßstreifen angeordnet, die paarweise in Halbbrücken von elektrischen Brückenschaltungen angeordnet sein können. Die Widerstände 26, 27 sind vorzugsweise in Dünnschichttechnik auf dem Dehnkörper 7 aufgebracht. Es ist günstig, wenn der K-Faktor der Dehnungsmeßstreifen bildenden Widerstände 26, 27 im Bereich von 10 bis 30 liegt.

Wenn das Randteil 19 durch eine beispielsweise vom Deckel 3 ausgehende Kraft um ein gewisses Stück gedehnt wird, dann folgen die Endabschnitte 24 der Verlagerung des mit ihnen verbundenen Abschnitts des Randteils 19. Je nach der Richtung der Verlagerung werden die biegebalkenartigen Abschnitte hierbei bewegt. Das Membranmittelteil 13 wird bei der Verlagerung der Abschnitte 17, 18 um das Ende 9 des Zapfens 10 geschwenkt. Hierdurch entsteht in den Endabschnitten 24, 25 ein Biegemoment, dessen Vektor senkrecht zur Zeichenebene steht. Die hieraus resultierenden Verformungen 1. Ordnung erzeugen kein Signal in den als Dehnungsmeßstreifen ausgebildeten Widerständen (26, 27), da diese in bezug auf das genannte Biegemoment symmetrisch zur neutralen Faser liegen.

Die Fig. 3 zeigt einen Dehnkörper 28, der ein in der Mitte mit dem Loch 8 versehenes Diagonalstück 29 enthält, das an seinen Enden je mit Eckelementen 30, 31 verbunden ist. Die Eckelemente 30, 31 sind über je zwei biegebalkenartige Abschnitte 32, 33 mit weiteren Eckelementen 34, 35 verbunden, die fest mit einem Deckel der in Fig. 1 dargestellten Art in Verbindung stehen. Die Abschnitte 32, 33 weisen wiederum den in Fig. 2 dargestellten Aufbau auf, d.h. sie enthalten einen breiten Mittelabschnitt 23 und zwei schmalere Endabschnitte 24, 25, auf denen jeweils die dehnungsempfindlichen Widerstände 26, 27 als Dehnungsmeßstreifen in Dünnschichttechnik angeordnet sind. Gegenüber dem um das Loch 8 konzentrisch verlaufenden Kreisbogen 22 sind die Abschnitte 32, 33 in gleichen Abständen tangential angeordnet, d.h. die in den Längsrichtungen der Abschnitte 32, 33 verlaufenden Mittellinien 36, 37 bilden Tangenten zum Kreisbogen 22.

Kräfte, die vom Deckel her auf die Eckelemente 34, 35 übertragen werden und diese in eine andere Lage bewegen, rufen über die Abschnitte 32, 33 eine Schwenkung des Diagonalstücks 29 um das Ende 9 des Zapfens 10 hervor. Im allgemeinen treten derartige Beanspruchungen infolge unterschiedlicher Temperaturkoeffizienten der für die Dehnkörper 7 bzw. 28 verwendeten Werkstoffe auf. Die durch Temperaturänderungen entstehenden Verformungen rufen keine Signale in den Dehnungsmeßstreifen hervor, da diese in den in Verbindung mit der Anordnung gemäß Fig. 2 angegebenen neutralen Fasern liegen.

Die in den Fig. 2 und 3 dargestellten Positionen der Dehnkörperteile sind für eine untere Temperaturgrenze maßgebend, bei der kein Druck durch Temperaturbeanspruchungen vorgetäuscht werden soll. Bei höheren Temperaturen werden das Membranmittelteil 13 und das Diagonalstück 29 aus den dargestellten Positionen geschwenkt.

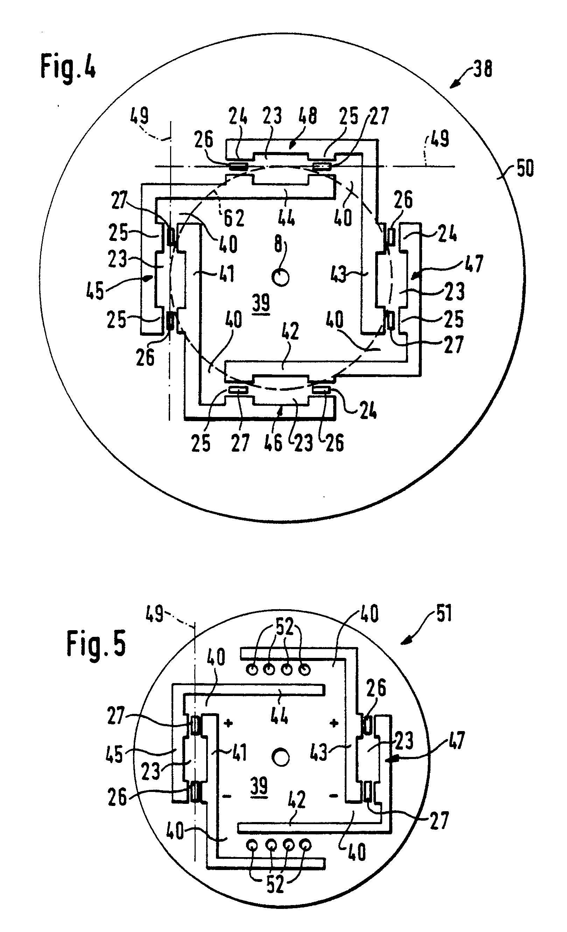

Der in Fig. 4 dargestellte Dehnkörper 38 ist kreisförmig ausgebildet oder wenigstens so in einem Halter eingespannt, daß eine kreisförmige Fläche freibleibt. Ein im wesentlichen quadratisches Membranmittelteil 39 enthält das kreisförmige Loch 8. An den vier Ecken des Membranmittelteils 39 springen jeweils Rechteckabschnitte 40 vor, deren eine Seite jeweils mit einer Seite des Membranmittelteils 39 fluchten. Das Membranmittelteil wird von vier L-förmigen Aussparungen 41, 42, 43, 44 begrenzt. Die Schenkel jeweils zweier Aussparungen 41, 44; 44, 43; 42, 43; 42, 41 stehen sich einander im Abstand gegenüber, da die radialen Abständen der Schenkel verschieden sind. Zwischen den sich einander gegenüberstehenden Schenkeln erstrekken sich biegebalkenartige Abschnitte 45, 46, 47, 48, die jeweils aus dem Mittelabschnitt 23 und den Endabschnitten 24, 25 bestehen. Die Endabschnitte 24, 25 tragen jeweils die als Dehnungsmeßstreifen ausgebildete Widerstände 26, 27.

Die biegebalkenartigen Abschnitte 45, 46, 47, 48 sind in bezug auf das Membranmittelteil 39 so angeordnet, daß ihre Mittellinie 49 in ihren Längsrichtungen tangential einen konzentrisch zum Loch 8 verlaufenden Kreisbogen 62 berühren. Wenn Beanspruchungen vom Halter her auf den äußeren Randteil 50 des Dehnkörpers 38 einwirken, der hierdurch um ein gewisses Maß seine Lage ändert, dann folgen die Stege diesen Verlagerungen und ziehen dabei das Membranmittelteil 39 nach. Das Membranmittelteil 39 wird hierbei ein Stück um das Ende 9 des Zapfens 10 geschwenkt. Durch die Ausgleichsbewegung werden solche Beanspruchungen der Widerstände 26, 27 vermieden, durch die Drücke vorgetäuscht werden.

Der in Fig. 5 dargestellte Dehnkörper 51 entspricht weigehend dem in Fig. 4 gezeigten Dehnkörper 38. Gleiche Teile sind mit den gleichen Bezugsziffern versehen. Bei dem Dehnkörper gemäß Fig. 5 sind nur die beiden biegebalkenartigen Abschnitte 45, 46, mit als Dehnungsmeßstreifen ausgebildeten Widerständen 26, 27 vorhanden. Die anderen Enden der Paare von L-förmigen Aussparungen stehen sich im gleichen Abstand gegenüber. Die Zone zwischen den sich gegenüberstehenden Enden der Aussparungen 44, 43 und 41, 42 sind für Löcher 52 vorgesehen, mit denen der Querschnitt des Dehnkörpers 51 auf einen gewünschten Wert eingestellt werden kann. Es können mehrere Löcher 52 in einer Reihe nebeneinander angeordnet werden. Zweckmäßig ist es, die Löcher 52 mit Laserstrahlen herzustellen. Mit der Anzahl und dem Querschnitt der Löcher 52 wird die Steifigkeit der Zone zwischen den sich gegenüberstehenden Enden der Aussparungen 43, 44 und 41, 42 auf einen Wert eingestellt, der bei den vom Halter auf den Dehnkörper 51 übertragenen Kräften eine elastische Schwenkung des Membranmittelteils 39 möglich macht. Außerdem können hierdurch bei Abweichungen innerhalb gewisser Grenzen gleiche Querschnitte zum Ausgleich der Toleranzen der Dehnkörperstärken erzeugt werden. Insbesondere bei den Körpern 51 aus Blech ist hiermit eine Einstellung gewünschter Stärken erzielbar. Kräfte, die aufgrund von Temperaturänderungen vom Halter auf den Dehnkörper 51 übertragen werden, bewirken eine Schwenkung des Membranmittelteils 39.

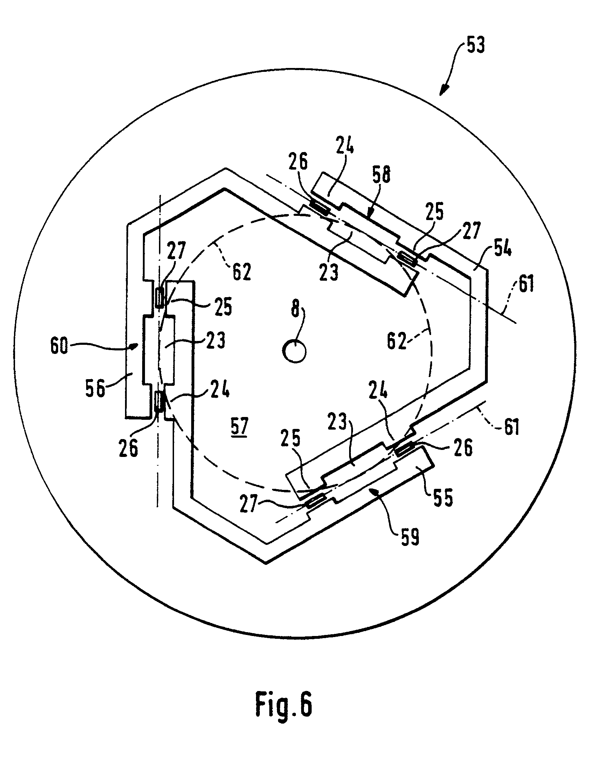

Eine weitere Ausführungsform eines Dehnkörpers 53 ist in Fig. 6 gezeigt. Der Dehnkörper 53 enthält drei, im wesentlichen V-förmige Aussparungen 54, 55, 56, die ein Membranmittelteil 57 umgeben, das in seiner Mitte das Loch 8 enthält. Die Spitzen der V-förmigen Aussparungen 54, 55, 56 sind jeweils abgeflacht. Darüber hinaus sind die Aussparungen 54, 55, 56 mit ihren Enden ineinander verschoben. Es stehen sich jeweils die Enden zweier Aussparungen 54, 56 - 54, 55 - 55, 56 gegenüber. Die Zonen zwischen den Enden der Aussparungen 54, 56; 54, 55; 55, 56 sind als biegebalkenartige Abschnitte 58, 59, 60 ausgebildet, die jeweils aus einem Mittelabschnitt 23 und zwei angrenzenden Endabschnitten 24, 25 bestehen. Die Endabschnitte 24, 25 tragen die dehnungsempfindlichen Widerstände 26, 27, bei denen es sich um Dehnungsmeßstreifen handelt.

Die biegebalkenartigen Abschnitte 58, 59, 60 haben jeweils Mittellinien 61, die einen konzentrisch das Loch umgebenden Kreisbogen 62 in gleichen Abständen voneinander tangieren.

Wenn von einem Halter, der einen vom Dehnkörper 53 verschiedenen Temperaturkoeffizienten aufweist, infolge Temperaturänderungen auf den Dehnkörper 53 Kräfte ausgeübt werden, die zu einer Verlagerung der Ränder führen, dann bewirken die über die biegebalkenartigen Abschnitte 58, 59, 60 übertragenen Kraftkomponenten eine Schwenkung des Membranmittelteils 57, ohne daß hierdurch in den Widerständen 26, 27 Druckänderungen vorgetäuscht werden.

Die Fig. 4, 5 und 6 zeigen ebenso wie die Fig. 1 und 2 die Ruhelagen der Membranmittelteile 13, des Diagonalstücks 29 und der Membranmittelteile 39 und 57 bei einer bestimmten Temperatur.

Anstelle einer Membran kann auch ein anderes Element verwendet werden, wenn nicht Drücke sondern anderen Kräfte gemessen werden sollen. Das Element ist dann so an den Anwendungsfall anzupassen, daß es von der Kraft beaufschlagt werden kann und eine dieser proportionale Bewegung ausführt.

Die Schwenkbewegung des Membranmittelteils 13 für den Fall nach außen gerichteter Verschiebungen des Randteils 19 ist in Fig. 2 durch einen Pfeil 63 gekennzeichnet. Die vier Verschieberichtungen des Randteils 19 sind jeweils mit 64, 65, 66 und 67 gekennzeichnet.

Die oben beschriebenen mechanisch-elektrischen Wandler können als Beschleunigungs-, Druck- oder Kraftsensoren eingesetzt werden, wobei die Dehnkörper 7, 28, 38, 51 und 53 durch die auftretenden Kräfte verformt werden. Es lassen sich Dehnungsmeßstreifen mit großer Empfindlichkeit einsetzen. Die Empfindlichkeit und Genauigkeit der Messung wird nicht in einer ins Gewicht fallenden Weise beeinträchtigt, wenn die transversale Empfindlichkeit der Dehnungsmeßstreifen nahezu so groß wie die longitudinale Empfindlichkeit ist. Durch die Erfindung wird vermieden, daß die Dehnungsmeßstreifen zweidimensionalen Spannungszuständen ausgesetzt sind, bei denen nahezu keine Ausgangssignale mehr auftreten. Zweidimensionale Spannungszustände werden vermieden, indem die Dehnkörper mit biegebalkenartigen Abschnitten 16, 17, 18, 32, 33, 45, 46, 47, 48, 58, 59, 60 versehen sind, die die Dehnungsmeßstreifen tragen und gegenüber der Mitte der Dehnkörper 7, 28, 38, 51, 53 tangential angeordnet sind. In diesen "Biegebalken" treten nur eindimensionale Spannungzustände auf. Die Dehnungsmeßstreifen werden in Dünnschichttechnik durch Nutzenfertigung hergestellt. Sie weisen eine planare Struktur auf. Die planaren Teile müssen in Halterungen eingespannt werden, die gegenüber den Dehnkörpern unterschiedliche Temperaturausdehnungskoeffizienten aufweisen. Die aufgrund der unterschiedlichen Temperaturausdehnungskoeffizienten der Halterung und der Dehnkörper auftretenden Verformungen können bei den tangentialen "Biegebalken" 16, 17, 18, 32, 33, 45, 46, 47, 58, 59 und 60 nur eindimensionale Spannungen hervorrufen, durch die die Dehnungsmeßstreifen so beansprucht werden, daß im wesentlichen ihre longitudinale Empfindlichkeit zum Tragen kommt.

**Ansprüche**

1. Mechanisch elektrischer Wandler (1) mit einem blattartigen, mindestens zwei Aussparungen (11, 12) aufweisenden Dehnkörper (7), der randseitig mit einer Halterung (3) verbunden ist, und dessen Mitte (13) durch ein druckbeaufschlagtes Element (9) auslenkbar ist und bei dem auf biegebalkenartigen Abschnitten mindestens zwei dehnungsempfindliche Widerstände (26, 27) angeordnet sind, von denen bei Auslenkung des Dehnkörpers (7) je einer auf Zug und der andere auf Druck beansprucht wird, dadurch gekennzeichnet, daß
   a) durch die Aussparungen (11, 12) ein erstes, fest mit der Halterung (3) verbundenes Teil (19) und ein mit diesem durch mindestens zwei biegebalkenartigen Abschnitte (17, 18) verbundenes zweites Teil (13) gebildet wird, dessen Mitte durch das Element (9) auslenkbar ist, und
   b) die biegebalkenartigen Abschnitte (17, 18) je einen breiteren Mittelabschnitt (23) und zwei daran angrenzende schmalere, die Widerstände (26, 27) tragende Endabschnitte (24) aufweisen und in gleichmäßigen Abständen voneinander tangential zu einem konzentrisch zur Mitte des zweiten Teils (13) verlaufenden Kreisbogen (22) angeordnet sind.

2. Wandler nach Anspruch 1, dadurch gekennzeichnet, daß das zweite Teil (13) Z-förmig mit einem Loch (8) in der Mitte und zwei in entgegengesetzte Richtungen weisenden Rechteckabschnitten (15, 16) ausgebildet ist, deren Enden über biegebalkenartige Abschnitte (17, 18) mit dem ersten Teil (19) verbunden sind.

3. Wandler nach Anspruch 1, dadurch gekennzeichnet, daß
   a) der Dehnkörper (28) eine im wesentlichen quadratische Grundfläche aufweist,
   b) das zweite Teil als Diagonalstück (29) mit einem Loch (8) in der Mitte ausgebildet ist, das mit zwei diagonal gegenüberliegenden Eckstücken (30, 31) des Dehnkörpers (28) verbunden ist, und
   c) die Eckstücke (30, 31) über je zwei biegebalkenartige Abschnitte (32, 33) mit den beiden anderen, an die Halterung angeschlossenen Eckstücken (34, 35) des Dehnkörpers (28) verbunden sind.

4. Wandler nach Anspruch 1, dadurch gekennzeichnet, daß
   a) der Dehnkörper (38) eine kreisförmige Grundfläche aufweist,
   b) das zweite Teil aus einem im wesentlichen quadratischen Membranmittelteil (39) mit einem Loch (8) in der Mitte besteht, an dessen Ecken vier nach außen weisende Rechteckabschnitte (40) ausgebildet sind, und
   c) die Rechteckabschnitte (40) über parallel zu den Seiten des Membranmittelteils (39) angeordnete biegebalkenartige Abschnitte (45, 46, 47, 48) mit dem als Randteil ausgebildeten ersten Teil (50) verbunden sind.

5. Wandler nach Anspruch 1, dadurch gekennzeichnet, daß
   a) der Dehnkörper (51) eine kreisförmige Grundfläche aufweist,
   b) das zweite Teil aus einem im wesentlichen quadratischen Membranmittelteil (39) besteht, an dessen Ecken vier nach außen weisende Rechteckabschnitte (40) ausgebildet sind,
   c) von denen zwei diametral gegenüberliegende über parallel zu den Seiten des Membranmittelteils (39) angeordnete biegebalkenartige Abschnitte (45, 47) und die beiden anderen über Abschnitte gleichbleibender Breite mit dem als Randteil ausgebildeten ersten Teil verbunden sind.

6. Wandler nach Anspruch 5, dadurch gekennzeichnet, daß in den Abschnitten gleichbleibender Breite mehrere Löcher (52) in einer Reihe vorgesehen sind.

7. Wandler nach Anspruch 1, dadurch gekennzeichnet, daß der zweite Teil aus einem dreiecksförmigen, in der Mitte mit einem Loch (8) versehenen Membranmittelteil (57) besteht, dessen Ecken über parallel zu den Dreiecksseiten angeordnete, biegebalkenartige Abschnitte (58, 59, 60) mit dem ersten Teil verbunden sind.

8. Wandler nach einem der Ansprüche 1 bis 7, dadurch gekennzeichnet, daß die dehnungsempfindlichen Widerstände (26, 27) aus Dehnungsmeßstreifen bestehen.

9. Wandler nach Anspruch 8, dadurch gekennzeichnet, daß die Dehnungsmeßstreifen in Dünnschichttechnik auf den Dehnkörper aufgebracht sind.

10. Wandler nach einem der Ansprüche 1 bis 9, dadurch gekennzeichnet, daß in das Loch (8) in der Mitte des zweiten Teils das Ende (9) eines Zapfens (10) ragt, der mit einer Membran (5) verbunden ist, die auf einer Seite von einem Druckmedium beaufschlagbar und mit einem Deckel (3) verbunden ist, an dem der Dehnkörper (7) befestigt ist.

**Claims**

1. Mechano-electrical transducer (1) with a plate-like expansion element (7), which has at least two cutouts (11, 12), which is joined at the rim to a holder (3), and the centre of which can be deflected by a pressurised element (9), and in which there are arranged on sections resembling transverse beams at least two expansion-sensitive resistors (26, 27) of which, upon deflection of the expansion element (7), one is compressed and the other is tensioned in each case, characterised in that
   a) the cutouts (11, 12) form a first part (19) joined firmly to the holder (3) and a second part (13), which is joined to said first part by at least two sections (17, 18) resembling transverse beams, and the centre of which can be deflected by the element (9), and
   b) the sections (17, 18) resembling transverse beams each have a wider middle section (23) and two narrower end sections (24) adjacent thereto, which carry the resistors (26, 27), and are arranged at uniform distances from one another tangential to a circular arc (22) extending concentrically with respect to the centre of a second part (13).

2. Transducer according to Claim 1, characterised in that the second part (13) is constructed in the shape of a Z having a hole (8) in the centre and two rectangular sections (15, 16), which point in opposite directions and whose ends are joined to the first part (19) via sections (17, 18) resembling transverse beams.

3. Transducer according to Claim 1, characterised in that
   a) the expansion element (28) has an essentially square basic area,
   b) the second part is constructed as a diagonal piece (29), which has a hole (8) in the centre and is joined to two diagonally opposite corner pieces (30, 31) of the expansion element (28), and
   c) the corner pieces (30, 31) are joined via in each case two sections (32, 33) resembling transverse beams to the other two corner pieces (34, 35) of the expansion element (28) which are connected to the holder.

4. Transducer according to Claim 1, characterised in that
   a) the expansion element (38) has a circular basic area,
   b) the second part consists of an essentially square central diaphragm part (39), which has a hole (8) in the centre and at whose corners four outwardly pointing rectangular sections (40) are constructed, and
   c) the rectangular sections (40) are joined via sections (45, 46, 47, 48) resembling transverse beams and arranged parallel to the sides of the central diaphragm part (39) to the first part (50), which is constructed as a rim part.

5. Transducer according to Claim 1, characterised in that
   a) the expansion element (51) has a circular basic area,
   b) the second part consists of an essentially square central diaphragm part (39) at whose corners four outwardly pointing rectangular sections (40) are constructed and,
   c) of which two diametrically opposite are joined, via sections (45, 47) resembling transverse beams and arranged parallel to the sides of the central diaphragm part (39), and the other two are joined, via sections of constant width, to the first part, which is constructed as a rim part.

6. Transducer according to Claim 5, characterised in that a plurality of holes (52) are provided in a row in the sections of constant width.

7. Transducer according to Claim 1, characterised in that the second part consists of a triangular central diaphragm part (57), which is provided in the centre with a hole (8), and whose corners are joined to the first part via sections (58, 59, 60) resembling transverse beams and arranged parallel to the sides of the triangle.

8. Transducer according to one of Claims 1 to 7, characterised in that the expansion-sensitive resistors (26, 27) consist of strain gauges.

9. Transducer according to Claim 8, characterised in that the strain gauges are applied to the expansion element using thin-film technology.

10. Transducer according to one of Claims 1 to 9, characterised in that projecting into the hole (8) in the centre of the second part is the end (9) of a pin (10) which is joined to a diaphragm (5), which can be pressurised on one side by a pressure medium and is joined to a cover (3) to which the expansion element (7) is fastened.

**Revendications**

1. Transducteur mécano-électrique (1) comportant un corps extensible (7), en forme de feuille, qui présente au moins deux évidements (11, 12), qui est relié en bordure à un support (3), dont le milieu (13) peut être dévié par un élément (9) sollicité par une pression et dans lequel, sur des tronçons du type éprouvette pour essais de flexion, sont disposées au moins deux résistances (26, 27), qui sont sensibles à l'extension et dont, lors de la déviation du corps extensible (7), respectivement l'une est sollicitée en traction et l'autre en compression, transducteur caractérisé par le fait que
   a) par les évidements (11, 12) sont formées une première partie (19) solidarisée avec le support (3), et une seconde partie (13), qui est reliée à la première par au moins deux tronçons (17, 18) du type éprouvette pour essais de flexion et dont le milieu peut être dévié par l'élément (9), et
   b) les tronçons (17, 18), du type éprouvette pour essais de flexion, présentent chacun un tronçon médian (23) plus large et deux tronçons d'extrémité (24) qui le jouxtent, sont plus étroits et portent la résistance (26, 27), et ils sont disposés à distances uniformes l'un de l'autre, tangentiellement à un arc de cercle (22) disposé concentriquement par rapport au milieu de la seconde partie (13).

2. Transducteur selon la revendication 1, caractérisé par le fait que la seconde partie (13) est en forme de z comportant un trou (8) au milieu et ayant deux tronçons rectangulaires (15, 16) qui sont dirigés en sens opposé et dont les extrémités sont reliées à la première partie (19) par l'intermédiaire de tronçons (17, 18) du type éprouvette pour essais de flexion.

3. Transducteur selon la revendication 1, caractérisé par le fait que
   a) le corps extensible (28) présente une surface de base sensiblement carrée,
   b) la seconde partie est conçue sous forme de pièce diagonale (29), ayant un trou (8) au milieu, reliée à deux pièces d'angle (30, 31), diagonalement situées l'une en face de l'autre, du corps extensible (28), et
   c) les pièces d'angle (30, 31) sont reliées chacune par l'intermédiaire de deux tronçons (32, 33), de type éprouvette pour essais de flexion, aux deux autres pièces d'angle, raccordées au support du corps extensible (28).

4. Transducteur selon la revendication 1, caractérisé par le fait que
   a) le corps extensible (38) présente une surface de base circulaire,
   b) la seconde partie est constituée d'une partie médiane (39) formant membrane sensiblement carrée, ayant un trou (8) au milieu, aux angles de laquelle sont formés quatre tronçons rectangulaires (40) dirigés vers l'extérieur, et
   c) les tronçons rectangulaires (40) sont reliés à la première partie (50), formant partie de bordure, par l'intermédiaire de tronçons (45, 46, 47, 48) du type éprouvette pour essais de flexion disposés parallèlement aux côtés de la partie médiane (39) formant membrane.

5. Transducteur selon la revendication 1, caractérisé par le fait que
   a) le corps extensible (51) présente une surface de base circulaire,
   b) la seconde partie est constituée d'une partie médiane (39) formant membrane, sensiblement carrée, aux angles de laquelle sont formés quatre tronçons rectangulaires (40) dirigés vers l'extérieur,
   c) dont deux, diamétralement opposés l'un à l'autre, sont reliés avec la première partie formant partie de bordure, par l'intermédiaire de tronçons (45, 47), du type éprouvette pour essais de flexion, disposés parallèlement aux côtés de la partie médiane (39) formant membrane et dont les deux autres le sont par l'intermédiaire de tronçons de largeur constante.

6. Transducteur selon la revendication 5, caractérisé par le fait que, dans les tronçons de largeur constante, plusieurs trous (52) sont prévus sur une rangée.

7. Transducteur selon la revendication 1, caractérisé par le fait que la seconde partie est constituée d'une partie médiane (57) formant membrane, de forme triangulaire, comportant un trou (8) en son milieu et dont les angles sont reliés avec la première partie par l'intermédiaire de tronçons (58, 59, 60), du type éprouvette pour essais de flexion, disposés parallèlement aux côtés du triangle.

8. Transducteur selon l'une des revendications 1 à 7, caractérisé par le fait que les résistances (26, 27) sensibles à l'extension sont constituées de jauges extensométriques.

9. Transducteur selon la revendication 8, caractérisé par le fait que les jauges extensométriques sont rapportées sur le corps extensible par la technique de couche mince.

10. Transducteur selon l'une des revendications 1 à 9, caractérisé par le fait que dans le trou (8), prévu au milieu de la seconde partie, pénètre l'extrémité (9) d'un téton (10), qui est relié à une membrane (5), qui peut être sollicitée sur une face par un fluide sous pression et qui est reliée avec un couvercle (3) sur lequel est fixé le corps extensible (7).

Fig.1

Fig.2

Fig.3

Fig.4

Fig.5

Fig.6